**Europäisches Patentamt**

**European Patent Office**

**Office européen des brevets**

(11) Veröffentlichungsnummer: **0 205 730**
**B1**

(12) **EUROPÄISCHE PATENTSCHRIFT**

(45) Veröffentlichungstag der Patentschrift: **11.04.90**

(21) Anmeldenummer: **86101050.2**

(22) Anmeldetag: **27.01.86**

(51) Int. Cl.⁵: **H 02 H 7/093**

(54) **Sicherheitseinrichtung für ein elektromotorisch angetriebenes Werkzeug.**

(30) Priorität: **05.06.85 DE 3520099**

(43) Veröffentlichungstag der Anmeldung:
**30.12.86 Patentblatt 86/52**

(45) Bekanntmachung des Hinweises auf die
Patenterteilung:
**11.04.90 Patentblatt 90/15**

(84) Benannte Vertragsstaaten:
**CH FR GB IT LI NL SE**

(56) Entgegenhaltungen:
**FR-A-2 377 750**
**US-A-3 906 322**
**US-A-4 020 404**

(73) Patentinhaber: **C. & E. FEIN GmbH & Co.**
**Leuschnerstrasse 41-47**
**D-7000 Stuttgart 1 (DE)**

(72) Der Erfinder hat auf seine Nennung verzichtet

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung bezieht sich auf eine Sicherheitseinrichtung für ein elektromotorisch angetriebenes Werkzeug, insbesondere Handwerkzeug, nach dem Oberbegriff des Hauptanspruchs.

Derzeit bekannte Elektrowerkzeuge werden über einen Hauptschalter ein- und ausgeschaltet. Die Regelung des Motors erfolgt über eine Regelelektronik, die ihre Ist-Werte z.B. von einem Tachogenerator erhält. Bei Ausfall der Regelelektronik kann es vorkommen, daß die Drehzahl des Motors in unzulässigem Maße ansteigt. Dies bedeutet, daß z.B. bei Winkelschleifern die Drehzahl so hoch werden kann, daß es zum Bersten der Schleifscheibe kommt. Deshalb wurde die Forderung aufgestellt, daß bei Ausfall der Regelelektronik der Motor abgeschaltet wird.

Eine Lösung hierfür bietet der Fliehkraftschalter, wie er bereits in der DE—PS—638 928 beschrieben ist. Diese Art der drehzahlabhängigen Abschaltung des Motors ist jedoch durch die mechanischen Teile sehr aufwendig und somit sehr kostspeilig. Auch ist diese Anordnung sehr anfällig gegen Verschmutzung, das wirkt sich z.B. auf die Funktionsgenauigkeit aus.

Ein weitere Sicherheitseinrichtung für einen Elekromotor ist aus der US—PS 3 906 322 bekannt. Bei dieser Einrichtung wird bei Unterschreitung einer bestimmten Drehzahl durch Ansteuerung eines dem Motor parallelgeschalteten Relais die Stromzuführ unterbrochen, indem ein im Motorstromkreis Liegender Relaiskontakt öffnet. Dabei enthält ein Drehzahlanzeigegerät einen Koinzidenz-Schaltkreis, der die Frequenz der elektrischen Impulse eines Tachogenerators mit der Frequenz des speisenden Wechselspannungsnetzes vergleicht. Nach diesem Verfahren ist der Abschaltpunkt direkt abhängig von den Frequenzschwankungen des Netzes. Eine Anpassung an andere Abschaltpunkte ist wegen der festen Netzfrequenz nur schwer zu realisieren.

Eine Sicherheitseinrichtung, die alle Merkmale des Oberbegriffs des vorliegenden Anspruchs 1 aufweist, ist aus der US—PS 4 020 404 bekannt. Diese Sicherheitseinrichtung dient dazu, bei Abweichung der Drehzahl eines Elektromotors um einen bestimmten Betrag von der gewünschten normalen Drehzahl, diese abzuändern oder den Motor überhaupt abzuschalten. Eine Zeitstufe ist dabei so angeordnet, daß die Stromzuführ zum Motor während des Anlaufs nicht unterbrochen wird.

Es wurde deshalb nach einer Möglichkeit gesucht, eine drehzahlabhängige Motorabschaltung zu schaffen, die mit geringem Aufwand realisiert werden kann, preiswert ist und deren eingestellter Abschaltwert über die gesamte Lebensdauer des Geräts gleich bleibt.

In der europäischen Patentanmeldung EP—A—190401, die einen Stand der Technik nach Art, 54(3) EPÜ darstellt, wurde eine Lösung hierfür gefunden, die dadurch gekennzeichnet ist, daß parallel zum Motor ein Relais angeordnet ist und da dem Relais ein steuerbarer Halbleiter parallelgeschaltet ist, der bei Überschreiten der zulässigen Motordrehzahl durch ein Abschaltsignal eines Schwellenwertschalters in den leitenden Zustand gebracht wird und in diesem verharrt, bis der Hauptschalter erneut eingeschaltet wird.

Die vorliegende Erfindung stellt eine alternative Lösung für das Erkennen der maximalen Drehzahl zu der europäischen Patentanmeldung EP—A—190401 dar, die dadurch gekennzeichnet ist, daß die Zeitstufe auf den maximalen Sollwert der Periodendauer der Signale eines Tachogenerators einstellbar ist, daß ein Relais dem Motor parallel geschaltet ist, und daß dem Relais ein steuerbarer Halbleiter parallel geschaltet ist, der bei überschreiten der zulässigen Motordrehzahl durch ein Abschaltsignal einer Auswertlogik in den leitenden Zustand gebracht wird und in diesem verharrt, bis der Hauptschalter erneut eingeschaltet wird.

Diese vorteilhafte Lösung erlaubt, daß man die Sicherheitsschaltung in Reihe zum Hauptschalter anordnet. Dabei wird das Relais über den Hauptschalter aktiviert und somit die Stromversorgung für den Motor ermöglicht. Ist der eingestellte Maximalwert für die Drehzahl erreicht, leitet in diesem Fall der Halbleiter, der parallel zum Relais angeordnet ist, den Strom am Relais vorbei, so daß das Relais abfällt und die Stromversorgung für den Motor, trotz eingeschaltetem Hauptschalter, unterbrochen ist.

Beschrieben wird die Sicherheitseinrichtung anhand von Zeichnungen. Es zeigen;

Fig. 1 ein Blockschaltbild der Sicherheitseinrichtung;

Fig. 2 ein detailliertes Schaltbild nach Fig. 1.

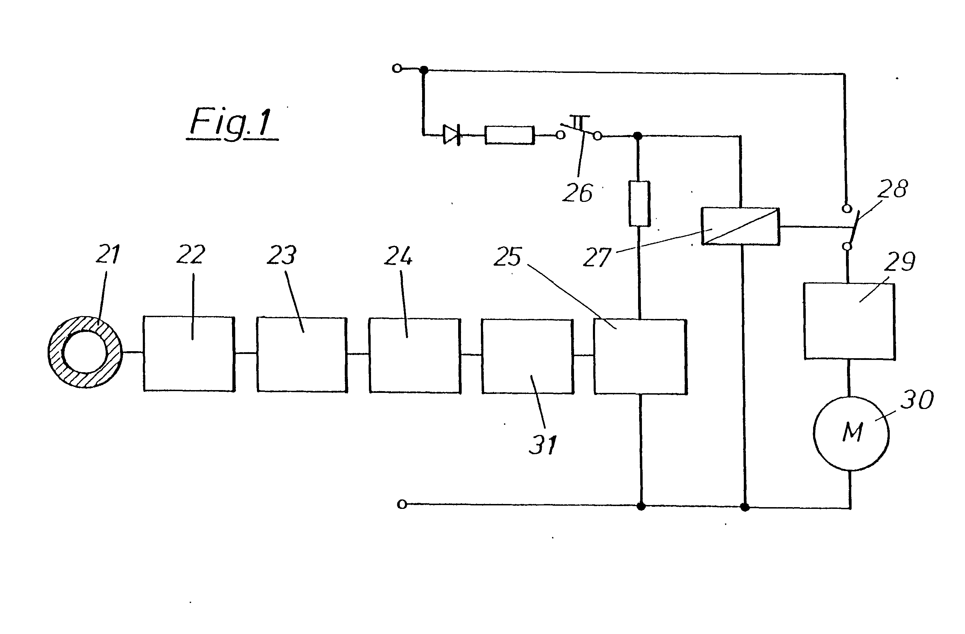

In Fig. 1 ist schematisch ein Ausführungsbeispiel der Sicherheitseinrichtung dargestellt. Der Tachogenerator 21 liefert ein Signal, dessen Frequenz der Drehzahl de Motors 30 proportional ist. Dieses Signal (Istwert) wird einer Synchronisierstufe 22 zugeführt, die die nachfolgende Zeitstufe 23 triggert. Die Zeitstufe 23 erzeugt ein Impulssignal (Sollwert), dessen Länge der maximalen Periodendauer (max. Drehzahl) entspricht. In der anschließenden Auswertlogik 24 werden Impulssignal und Tachosignal miteinander verglichen wenn der Istwert kleiner als der Sollwert ist, wird ein Signal erzeugt. Dieses Signal erreicht dann über einen Zündverstärker 31 ein Leistungsteil in Form eines steuerbaren Halbleiters 25. Das Leistungsteil 25, hier beispielsweise eine Thristor, sperrt dann nicht mehr den Durchgang zu dem in Reihe liegenden Relais 27, so daß das Relais 27 anziehen und die Stromzuführ zum Motor 30, über den Relaiskontakt 28 unterbrechen kann. Der Stromfluß über den Hauptschalter 26 läuft nun über den Halbleiter 25. Der Lastkreis bleibt so lange unterbrochen, bis der Hauptschalter 26 erneut eingeschaltet wird.

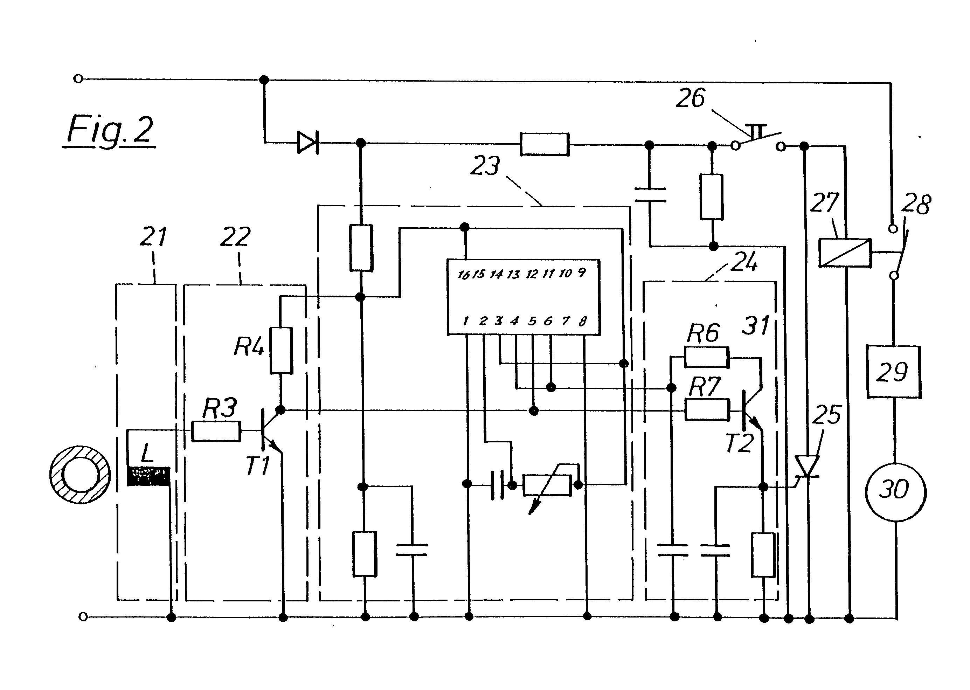

Fig. 2 zeigt das Ausführungsbeispiel nach Fig. 1 in diskretem Aufbau. Die Synchronisierstufe 22, bestehend aus den Widerständen R3 und R4 sowie aus dem Transistor T1, leitet aus der in der Spule L des Tachogenerators 21 induzierte Wechselspannung ein synchrones Rechtecksignal ab.

Dieses Rechtecksignal triggert die einstellbare Zeitstufe 23, die am Ausgang ein zeitlich konstantes Rechtecksignal erzeugt. Beide Werte werden in der nachfolgenden Auswertlogik 24 über die Widerstände R6 und R7 und den Transistor T2 verarbeitet, und es wird nur dann ein Signal erzeugt, wenn die eingestellte Zeit größer ist als die Periodendauer des synchronen Rechtecksignals. Der Transistor T2 dient auch direkt als Zündverstärker 31, der das Leistungsteil 25, hier einen Thyristor, zündet. Das Relais 27 liegt nach Betätigen des Hauptschalters 26 direkt an der Spannungsversorgung.

Ein Fachmann wird auch leicht erkennen können, daß bei der hier dargestellten Lösung der Thyristor 25 durch eine Transistorschaltung ersetzt werden kann, mit der die Stromversorgung für das Relais 27 kurzgeschlossen werden kann.

Diese Sicherheitseinrichtung stellt eine preiswerte, funktionssichere und leicht zu realisierende Ergänzung zu einer vorhandenen Regelelektronik 29 im Elektrowerkzeug dar. Sie bietet dem Bedienenden beim Ausfall der Regelelektronik Schutz vor den Gefahren einer unkontrolliert drehenden Maschine.

**Patentansprüche**

1. Sicherheitseinrichtung für ein elektromotorisch angetriebenes Werkzeug, das über einen Hauptschalter (26) und eine Regelelektronik (29) einschaltbar ist und über einen Tachogenerator (21) zur Erfassung der Motordrehzahl verfügt, wobei die Sicherheitseinrichtung aus einer Synchronisierstufe (22), einer Zeitstufe (23), einer Auswertlogik (24) und einem Relais (27) besteht und über Signale des Tachogenerators (21) derart ansteuerbar ist, daß das Relais (27) über einen Kontakt (28) die Stromzufuhr zu dem Motor (30) unterbricht, dadurch gekennzeichnet, daß die Zeistufe (23) auf den maximalen Sollwert der Periodendauer der Signale des Tachogenerators (21) einstellbar ist, daß das Relais (27) dem Motor (30) parallel geschaltet ist, und daß dem Relais (27) ein steuerbarer Halbleiter (25) parallelgeschaltet ist, der bei überschreiten der zulässigen Motordrehzahl durch ein Abschaltsignal der Auswertlogik (24) in den leitenden Zustand gebracht wird und in diesem verharrt, bis der Hauptschalter erneut eingeschaltet wird.

2. Sicherheitseinrichtung nach Anspruch 1, dadurch gekennzeichnet, daß die Sicherheitsschaltung in Reihe zum Relais (27) angeordnet ist.

**Revendications**

1. Dispositif de sécurité pour un outil qui est commandé par un moteur électrique, peut être enclenché par l'intermédiaire d'un interrupteur principal (26) et d'une électronique de réglage (29), et est équipé d'un générateur tachymétrique (21) pour détecter la vitesse angulaire du moteur, le dispositif de sécurité comprenant un étage de synchronisation (22), un étage chronométrique (23), un circuit logique d'interprétation (24) et en relais (27), et étant activable, par l'intermédiaire de signaux du générateur tachymétrique (21), de façon telle que le ralais (27) interrompe, par l'entremise d'un contact (28), la délivrance de courant au moteur (30), caractérisé par le fait que l'étage chronométrique (23) peut être réglé sur la valeur de consigne maximale de la durée de périodes des signaux du générateur tachymétrique (21); par le fait que le relais (27) est branché en parallèle au moteur (30); et par le fait qu'un semi-conducteur commandable (25), branché en parallèle au ralais (27), est mis à l'état conducteur par l'intermédiaire d'un signal de déclenchement du circuit logique d'interprétation (24), lors d'un dépassement de la vitesse angulaire admissible du moteur, et demeure dans cet état jusqu'à ce que l'interrupteur principal soit de nouveau enclenché.

2. Dispositif de sécurité selon la revendication 1, caractérisé par le fait que le circuit de sécurité est branché en série avec le ralais (27).

**Claims**

1. Security device for an electrically driven tool that can be switched on through a main switch (26) and electronic controls (29), having a tachometer-generatore (21) for controlling the speed whereby the safety device consists of a synchronization stage (22), a timer stage (23), a processing stage (24) and a relay (27) and can be controlled by signals of the tachometer-generator (21) in such a way that the relay (27) interrupts the supply of current to the motor (30) through a contact (28) characterised that the timer stage (23) can be adjusted to the maximal reference value of the period of the signals of the tachometer-generator (21) that the relay (27) is connected in parallel with the motor (30) and that a controllable semi-conductor (25) that electrically parallels the relay (27) becomes conductive through a switch-off signal of the processing stage when the permissible speed is exceeded and remains conductive until the main switch is turned on again.

2. Safety device as defined in claim 1 characterised that the safety circuit is in electrical series with the relay (27).

_Fig.1_

21 22 23 24 25 31 26 27 28 29 30 M

Fig.2

EP 0 205 730 B1